Europäisches Patentamt

**European Patent Office**

Office européen des brevets

(19)

(11) Publication number: **0 152 073**

**A2**

(12) # EUROPEAN PATENT APPLICATION

(21) Application number: **85101336.7**

(22) Date of filing: **08.02.85**

(51) Int. Cl.⁴: **B 29 C 55/24**
**F 16 F 1/46**
**//B29K71:00, B29L29:00**

(30) Priority: **08.02.84 US 578086**
**28.12.84 US 687362**

(43) Date of publication of application:
**21.08.85 Bulletin 85/34**

(84) Designated Contracting States:
**DE FR GB IT**

(71) Applicant: **E.I. DU PONT DE NEMOURS AND COMPANY**
**1007 Market Street**
**Wilmington Delaware 19898(US)**

(72) Inventor: **Hannover, Finn**
**2115 Meadow Lane**
**Wilmington Delaware 19810(US)**

(72) Inventor: **Hatchadoorian, Edward**
**10 N. Cliffe Drive**
**Wilmington Delaware 19809(US)**

(72) Inventor: **Kinard, Richard Dale**
**2021 Floral Drive**
**Wilmington Delaware 19810(US)**

(72) Inventor: **Lukhard, Mark Howard**
**18 Thorn Hollow Road**
**Newark Delaware 19711(US)**

(72) Inventor: **Okine, Richard Kafue**
**1303 Radford Road**
**Wilmington Delaware 19803(US)**

(74) Representative: **Abitz, Walter, Dr.-Ing. et al,**
**Abitz, Morf, Gritschneder, Freiherr von Wittgenstein**
**Postfach 86 01 09**
**D-8000 München 86(DE)**

(54) Monolithic springs of thermoplastic elastomers.

(57) Monolithic springs of oriented thermoplastic elastomers can be prepared by forcing a tubular preform into a die to expand the diameter while subjecting the preform to longitudinal compression.

## F I G. 1

0152073

AD-5335-A

## TITLE
Monolithic Springs of

Thermoplastic Elastomers

Cross-Reference to Related Application

This is a Continuation-in-Part of copending application Serial Number 578,086, filed February 8, 1984.

## BACKGROUND OF THE INVENTION

Belts and rigid loop springs have previously been prepared from elastomeric materials, including thermoplastic elastomers such as copolyetheresters. A wide variety of materials and constructions has been proposed for these products, often involving reinforcement of an elastomeric material with textile fabrics or yarns. In the preparation of products of this type using copolyetherester elastomers, composites have previously been prepared using two copolyetherester elastomers having different melting points. In addition, monolithic elastomeric belts have been suggested that are circumferentially oriented by stretching a tube of the thermoplastic elastomer over rotating pins. However, despite the desirable qualities of polyester elastomers for use in endless belts or springs, it has not been practical, heretofore, to prepare oriented thick-walled endless belts of particularly small diameter. For example, the techniques shown in Ballou U.S. Patent 4,012,962, involving stretching of a sleeve-like member over pins and subsequently slicing the resulting oriented product, are not amenable to the preparation of small diameter thick walled springs, since the inner diameter of the polymeric preform to be oriented would often not permit the insertion of stretching pins of sufficient size and strength to carry out the orientation.

## SUMMARY OF THE INVENTION

The present invention provides an improved process for the preparation of oriented polymeric endless loop springs which is especially applicable to the preparation of small diameter springs of this type. The invention also provides elastomeric springs prepared by the process and characterized by a unique orientation profile.

Specifically, the instant invention provides a method of producing an oriented polymeric spring comprising:

(a) forming a tubular preform of segmented, thermoplastic copolyetherester elastomer in which the crystalline ester segment consists essentially of polybutylene terephthalate,

(b) heating the preform to a temperature of about from 20 to 120°C,

(c) forcing the heated preform into a die with lubrication to expand the diameter while subjecting the preform to longitudinal compression to reduce the length of the preform, the dimensions of the die and the longitudinal compression being such that the ratio of the axial cross-sectional area of the preform to the axial cross-sectional area of the resulting oriented tubular structure is about from 2 to 5 and the ratio of the length of the preform to the length of the oriented tubular structure is about from 2 to 4, and

(d) heat setting the oriented tubular structure at a temperature of about from 20 to 60 centigrade degrees below the crystalline melting point of the copolyetherester while maintaining the expanded diameter and reduced length.

The instant invention further provides a monolithic polymeric endless loop spring prepared from segmented, thermoplastic copolyetherester elastomer in which the crystalline ester segment consists essentially of polybutylene terephthalate and oriented in the circumferential direction, and which is characterized by an x-ray diffraction scan from the polybutylene terephthalate regions having an intensity of the reflection from the (010) plane at least about two times higher than that of the intensity of the reflection from the (100) plane when the diffraction vector is coincident with the radial direction of the loop.

## BRIEF DESCRIPTION OF THE DRAWINGS

Figure 1 is a cross-sectional view of a die which can be used in the process of the present invention.

Figure 2 represents x-ray diffraction scans of a spring made according to the present invention and two springs falling outside of the present invention.

## DETAILED DESCRIPTION OF THE INVENTION

The present polymeric springs are prepared from segmented, thermoplastic copolyetherester elastomers. An important characteristic of the elastomers is that the hard or crystalline segments of the copolyetherester elastomers consist essentially of polybutylene terephthalate. Such elastomers which can be used in the present invention include, for example, those described in McCormack and Brown U.S. Patent 4,136,715 at column 3, line 62 to column 5, line 66, which patent is hereby incorporated by reference.

4

Other copolyetherester elastomers which can be used in the present invention include those having crystalline aromatic polyester hard segments and polylactone soft segments, and particularly those block copolymers of poly-E-caprolactone, polybutylene terephthalate and diethylene glycol diglycidyl ether. Such copolyether ester elastomers are commercially available in various percentage compositions as Pelprene S polyester elastomers from Toyobo. Their preparation is described in Japanese patent application publications No. 48-4115 and 48-4116.

The springs of the present invention are generally prepared from unmodified copolyetherester. However, in addition to the thermoplastic elastomer itself, additives can be incorporated into the springs which do not substantially detract from the fundamental performance characteristics of the thermoplastic elastomer. For example, colorants, ultraviolet light absorbers and heat stabilizers can be added, as well as compounds to impart surface lubricity.

In the preparation of the elastomeric springs, a preform of thermoplastic elastomer is first made. Typically, the tubular preform is prepared by extrusion of a tube of the elastomer, followed by cutting to length. Conventional molding techniques can also be used, in which molten polymer is introduced into a mold and the mold subsequently cooled to ambient temperatures. In still another alternative, the preforms can be machined from solid blocks of polymer.

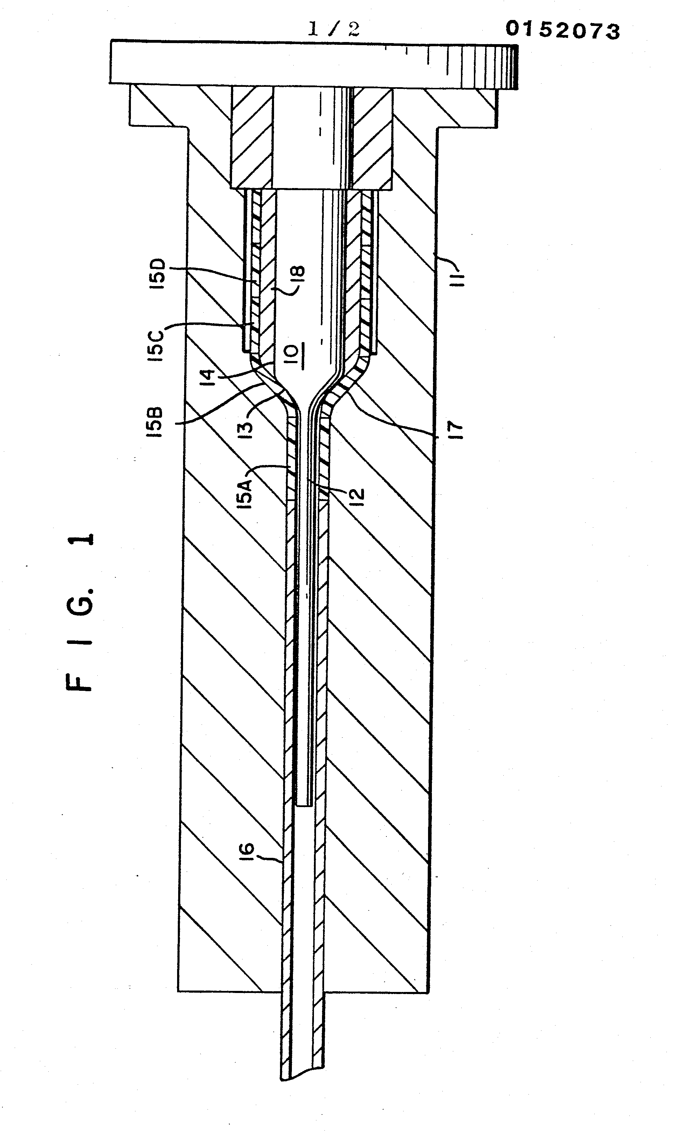

In accordance with the process of the present invention, the tubular preform is oriented by circumferential expansion while subjecting the preform to longitudinal compression. A die which can be used is shown in Figure 1. There, mandrel 10 is centered axially in housing 11 and is fastened or clamped to housing 11 by means not fully shown. Mandrel 10 comprises feed section 12 having an outside diameter suitable for entry into the axial aperature of the preform. The outside diameter of mandrel 10 increases in forming section 13 to the diameter of section 14, which is substantially equal to or somewhat larger than the desired final inside diameter of the oriented spring. In this case the final diameter is determined by the mandrel in combination with sleeve 18.

The dimensions of the die are adjusted to provide a reduction in the axial cross-sectional area of the preform. This reduction should be such that the ratio of the axial cross-sectional area of the preform to that of the final oriented spring is about from 2 to 5. In the preparation of the oriented spring, a preform is placed within housing 11 which is sized internally to a clearance fit with the outside diameter of the preform. The preform and/or the die surfaces should be lubricated for satisfactory performance. For example, the preform can be coated with a high pressure grease such as that commercially available from Evans Products Company as Extreme Pressure Lube #3 lubricant. In the alternative, an internal lubricant can be incorporated into the preform.

The die surfaces are maintained at a temperature of about from 20 to 120°C. Heating of the preform and one or both die surfaces to higher temperatures within this range is preferred in the preparation of thicker walled springs. Ram 16 is advanced by means, not shown, to push the axial aperature of the preform onto feed section 12 of mandrel 10 to position 15A. Further advance of ram 16 pushes preform onto section 13 of mandrel 10 at position 15B, expanding the inside and outside diameters progressively from leading to trailing end. Ram 16 is then withdrawn. The preform, now bell-mouthed, slides backwards off section 13 and remains at the entrance to that section. A second preform is placed onto mandrel 10 as before, forcing the first preform onto section 14 of mandrel 10 at position 15C, thus expanding the preform to the desired final diameter. The procedure is then repeated, advancing the first preform to position 15D. The first spring so made typically has a tapered longitudinal cross-section and is discarded. Springs formed thereafter, being subject to compressive force from the preceding spring, are uniform in cross-section. The back pressure is controlled by the expansion angle and the number and geometry of the springs being formed. If desired, additional back pressure can be provided by suitable coil springs or hydraulic means, as will be evident to those skilled in the art. The length of the finished spring is considerably shorter than the preform, having been compressed to accommodate radial disbursement of material. The ratio of the length of the preform to the length of the oriented, compressed tubular structure is about from 2 to 4. The decreases in the axial cross-sectional area and length, with the corresponding increase in circumference of the tube, provides the degree of orientation needed for the strength and integrity of the final oriented spring of this invention.

The inside surface 17 surrounding section 13 is sized to accommodate the increasing outside diameter of the changing preform with a small clearance between the outside diameter of the spring and the inside surface 17.

Additionally Mandrel 10 preferably has sleeve 18 covering section 14. This sleeve is removable and thus provides a convenient support for use during heat setting the oriented spring, thus maintaining the expanded diameter of the spring.

After expansion of the preform on the mandrel, the oriented spring is heat set at a temperature of about from 20 to 60 centigrade degrees below the crystalline melting point of the copolyetherester while maintaining the expanded diameter and reduced length. The heat setting temperature for many preferred copolyetheresters is about from 140 to 210°C, and especially about from 150 to 190°C. The heating can be effected by any convenient means, such as a heat-setting oven or hot oil. It is necessary to maintain the expanded diameter of the tubular structure during heat-setting, and a removable sleeve on the larger portion of the mandrel, as described above, is conveniently used to maintain this expanded diameter. In addition, if desired, further longitudinal compression can be applied during the heat setting step. After heat setting, the formed spring is cooled and, if desired, a secondary sizing operation can be carried out, for example, to square the ends of the oriented spring by trimming.

The molecular orientation of a polymeric structure of the present invention is characterized by its X-ray diffraction behavior, and the intensity of the reflections arising from regions of crystalline polybutylene terephthalate. The measurement of such reflections and the assignment of Miller indices to these reflections is described, for example, by Desborough et al., A Comparison of Published Crystalline Structures of Poly(tetramethylene terephthalate), 18 Polymer 825-830 (August, 1977), hereby incorporated by reference.

The polymeric springs of the present invention are characterized by an x-ray diffraction scan having an intensity of the reflection from the (010) plane higher than that of the intensity from the (100) plane, when the diffraction vector is coincident with the radial direction of the loop. This unique x-ray diffraction scan is a function of the orientation pattern of the springs, and results from the combination of circumferential stretching and axial compression. In the absence of such longitudinal compression during orientation, at the same draw ratio, a less desirable product is obtained characterized by lower tensile strength and lower elongation.

This type of orientation can be detected by an x-ray diffraction scan from the sample obtained with a powder diffractometer operated in the usual reflection mode. A section is cut from the loop and flattened so that a planar surface is formed by the circumferential and axial directions. This sample is mounted in the diffractometer so that this surface constitutes the sample surface. As a consequence, the radial direction which is normal to this surface is coincident with the diffraction vector, which bisects the incident and diffracted beams. Under these conditions, and employing CuK$\alpha$ radiation having a wavelength of 0.1542 nm, for a sample of this invention the intensity of the (010) reflection, near 17° 2-theta, will be at least about two times higher than that of the (100) reflection, near 23° 2-theta. The maximum ratio of the intensity of the (010) reflection to that of the (100) reflection is not important, but will generally not exceed about ten to one.

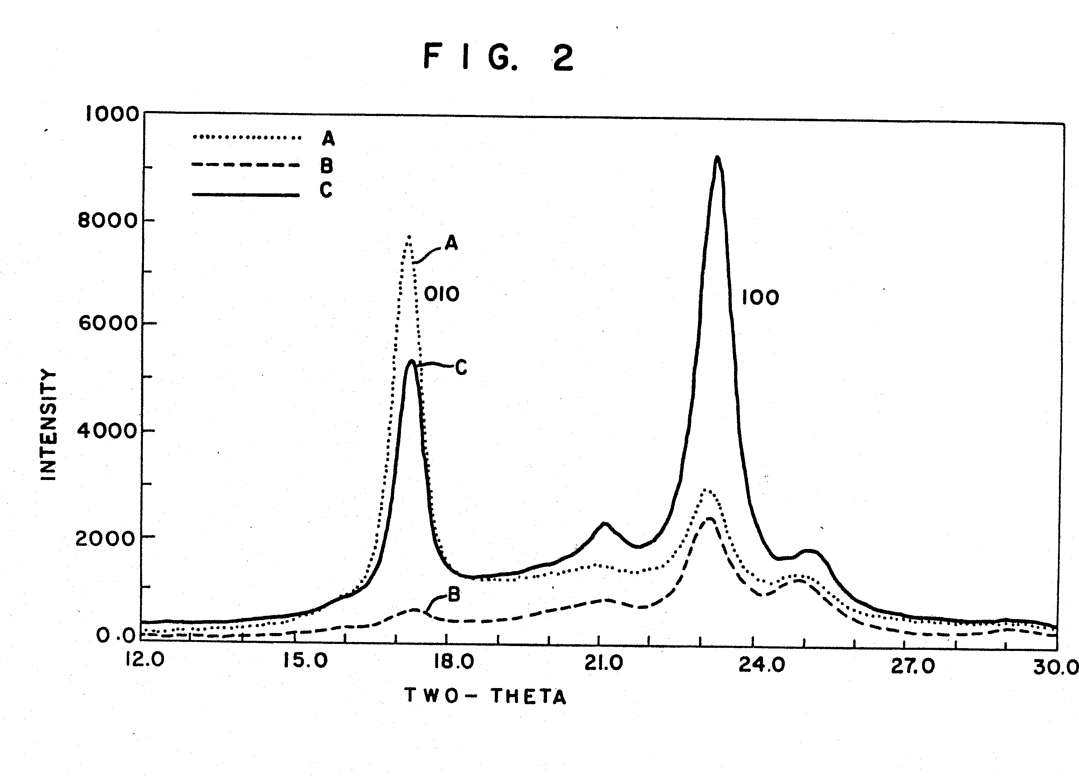

Illustrative X-ray diffraction scans are shown in Figure 2. There, the reflected intensity from a spring of the present invention is shown by line A, which exhibits a peak at the (010) 17° reflection angle of nearly 8000, while the peak at the (100) 23° reflection angle is about 3000. This spring had been longitudinally compressed to provide a ratio of the length of the preform to the length of the oriented tubular structure of about 2.25. Line B represents the reflected intensity from a spring prepared by a similar method, but in which the ratio of the length of the preform to the length of the oriented tubular structure was only about 1.3. In that spring, the intensity of the reflection from the (010) plane at 17° 2-theta was about 600, while the intensity of the reflection from the (100) plane, at 23° 2-theta was about 2400, higher than the (010) intensity. Line C represents a spring prepared by stretching a perform between two pins, to provide a ratio of the length of the perform to the length of the oriented tubular structure of about 1.7. In this spring, represented by line C on Figure 2, the (100) peak is higher than the (010) peak, the intensity of the (100) peak being about 9500 while the intensity of the (010) peak is about 5500.

The polymeric springs of the present invention can be used in a wide variety of applications, and are characterized by high strength, low creep and good resistance to fatigue. These springs can be prepared in a wide variety of sizes from as low as about 25mm in diameter. Exceptionally large springs can also be made. However, the benefits

0152073

of the invention are most fully realized at diameters of about 150mm or less. Accordingly, the springs can be used in a broad spectrum of applications, such as automotive clutches and motorcycle suspensions. In such applications requiring spring resistance to hundreds of thousands of repetitive cycles of operation, it is preferred that the springs be mounted on surfaces that are concave in geometry in the areas that bound the inner sections of the spring loops. For example, when the springs are mounted between two cylindrically-shaped pins, the pin portions on which the springs are supported should be shaped to have a concave profile. A typical radius of curvature of about 75mm is preferred for the degree of concavity when used with small diameter loop springs such as a 25mm spring. With mounting on such concave surfaces, the useful life of the spring is markedly improved, in that the springs exhibit substantially less fibrilation in extended use.

The nonconductive and antimagnetic properties and the rust resistance of these polymeric springs also make them suitable for use in electronic equipment applications. The unique method of production of the present products permits the preparation of smaller sized, thick walled oriented polymeric springs having a diameter of about from 25 to 150mm, which have heretofore not been available using previous production techniques.

The orientation pattern of the present springs, resulting from the combination of circumferential stretching and longitudinal compaction, provides a product that exhibits less long-term fibrillation in the axial direction than springs having orientation patterns that result in (010) reflection intensities that are, for example, equal to or less than the (100) reflection intensity. This orientation pattern therefore results in improved long-term wear characteristics, since the reduced axial direction fibrillation results in less cylindrical delamination in a spring in use.

The present invention is further illustrated by the following specific examples.

### EXAMPLES 1-3

Several tubular preforms were molded from copolyetherester and machined to a length of 43.0mm, an outside diameter of 12.0mm and an inside diameter of 5.0mm. The preforms were placed in apparatus as shown in Figure 1, both the preform and the die being at room temperature. The preforms were pressed through the die at room temperature and subsequently heat set in oil at a temperature of 160°C for 30 minutes with an axial clamp to maintain the reduced length of the spring. The final dimensions of the springs were a length of 14.2mm, an outside diameter of 35.5mm and an inside diameter of 29.8mm. The springs were tested and found to exhibit the following results:

| Test | Result |
|---|---|
| **Example 1** | |
| Stress at 20% spring center line strain | 44600 kPa |
| 27600 kPa static load at 110°C for 170 hours | 1% creep per decade of time |
| **Example 2** | |
| Stress at 20% spring center line strain | 42500 kPa |
| Cyclic loading 0 to 32400 kPa at 20°C for 1.7 x $10^6$ cycles at 2Hz | 1.27% creep per decade of cycles |

0152073

Example 3

Stress at 20% spring          41200 kPa
center line strain

Cyclic loading 4100-          1.7% creep per
26400 kPa at 90°C at 2 Hz    decade of time

The resulting springs were further tested and found to exhibit an x-ray diffraction scan having a reflection intensity from the (010) plane at least twice as high as the reflection intensity from the (100) plane.

## EXAMPLE 4

The general procedure of Example 1 was repeated, except that the preform was machined from a block of polyetherester and had a length of 50.8mm, an internal diameter of 26.85mm and an outside diameter of 45.8mm. After forming the preform in a die as before, the resulting spring was heat set at a temperature of 175°C for 15 minutes to provide an oriented spring having an internal diameter of 129mm and an outer diameter of 141mm. The length of the spring was trimmed to 22.0mm. The spring was tested as before and found to exhibit the following properties:

| Test | Result |
|------|--------|
| Tensile Strength | 78300 kPa |
| Ultimate Elongation | 53.53% |
| Stress at 15% spring center line strain | 24800 kPa |
| Creep Rate 27600 kPa static load at 110°C | 2.87% creep per decade of time |

If the resulting spring were further tested, it would exhibit an x-ray diffraction scan having a reflection intensity from the (010) plane at least twice as high as the intensity from the (100) plane.

0152073

## Example 5

Several tubular preforms were molded from copolyether ester which was a block copolymer of about 28 weight % poly-E-caprolactone, about 69 wt. % polybutyleneterephthalate, and about 3 wt. % diethylene glycol diglycidyl ether, and available from Toyobo as Pelprene S2000. The preforms were machined to a length of 45.7 mm, an outside diameter of 11.7 mm and an inside diameter of 4.3 mm. The preforms were placed in the apparatus as shown in Figure 1. Both preform and die were heated to 120°C. The preforms were pressed through the die at this temperature and subsequently heatset in oil at 175°C for 10 min. The final trimmed dimensions of the springs were a length of 12.7 mm, and outside diameter of 30.3 mm and an inside diameter of 24.8 mm. The springs were tested as before and found to exhibit the following properties:

| | |
|---|---|
| Stress at 15% spring Center line strain | 34,240 KPa |
| Tensile Strength | 68,000 KPa |
| Ultimate Elongation | 32% |
| Creep Rate 27,600 KPa static load at 110°C | 1.145% creep per decade of time |

We Claim:

1. A method of producing an oriented polymeric spring comprising:

(a) forming a tubular preform of segmented, thermoplastic copolyetherester elastomer in which the crystalline ester segment consists essentially of polybutyleneterephthalate,

(b) heating the preform to a temperature of about from 20 to 120°C,

(c) forcing the heated preform into a die with lubrication to expand the diameter while subjecting the preform to longitudinal compression to reduce the length of the preform, the dimensions of the die and the longitudinal compression being such that the ratio of the axial cross-sectional area of the preform to the axial cross-sectional area of the resulting oriented tubular structure is about from 2 to 5 and the ratio of the length of the preform to the length of the oriented tubular structure is about from 2 to 4, and

(d) heat setting the oriented tubular structure at a temperature of about from 20 to 60 centigrade degrees below the crystalline melting point while maintaining the expanded diameter and reduced length.

2. A polymeric spring prepared by the method of claim 1.

3. A monolithic polymeric endless loop spring prepared from segmented, thermoplastic copolyetherester elastomer in which the crystalline ester segment consists essentially of polybutyleneterephthalate, and oriented in the circumferential direction, and which is characterized by an x-ray diffraction scan from the polybutyleneterephthalate regions having an intensity of the reflection from the (010) plane at least about two times higher than that of the intensity of the reflection from the (100) plane, when the diffraction vector is coincident with the radial direction of the loop.

# F I G.  1

15B  15C  15D

14

15A  13

16

10

18

12

17  11

1 / 2

0152073

F I G. 2

INTENSITY

1000

8000

6000

4000

2000

0.0

A ·············
B - - - - -
C ———————

A

OIO

C

B

100

TWO-THETA

12.0    15.0    18.0    21.0    24.0    27.0    30.0

2 / 2

0152073